# EUROPEAN PATENT APPLICATION

(11) **EP 4 818 092 A1**
(43) Date of publication of application: **07.10.2026**
(21) Application number: 25382316.5
(22) Date of filing: 31.03.2025
(51) Int. Cl.: B65H 29/32, B65H 29/46, B65H 31/10, B65H 31/20, B65H 29/24

(54) **EJECTION SYSTEM FOR LAMINATED MATERIAL STACKERS**

(71) Applicant: European Machinery Engineering Projects, S.L., 03804 Alcoy (Alicante) (ES)
(72) Inventor: MIRA VERDÚ, Santiago, 03804 Alcoy (Alicante) (ES); MAS CANO, Eduardo, 03804 Alcoy (Alicante) (ES)
(74) Representative: Ungria López, Javier

(57) **Abstract**

The ejection system for the laminated material stacker allows the position of retractable guides (5), which are the elements that secure the position of the laminates when they are released, to be adjusted so as to reduce the distance between vacuum assemblies and a pallet/laminates that have already been stacked. The system further comprises a plurality of vacuum assemblies that can be moved towards or away from each other, adapting to the width of the laminates of laminated material entering the system.

## Description

### OBJECT OF THE INVENTION

This invention falls within the industry of processing laminated material, specifically paper and cardboard.

### TECHNICAL PROBLEM TO BE RESOLVED AND BACKGROUND OF THE INVENTION

Stackers are machines configured to receive laminates of cardboard, move them to a given position and release them to form a stack of laminates on a stacking base, preferably a pallet. Stackers are generally found at the end of a laminated material processing line, with the stacker ejection system being the last stage of the line before releasing the processed laminate.

The stacker ejection systems known in the state of the art comprise perforated belts, which form part of a vacuum assembly, configured to pick up the laminates by vacuum, from a top face of the laminate, suspending them in the air for their movement to the position they are going to occupy on the pallet. Subsequently, by breaking the vacuum, the laminate is ejected onto said pallet, which is located below the ejection system. The position of the pallet, in a vertical direction, is adjusted by a lifting system so that, when the stacking of the laminates is about to begin, the pallet is lifted, moving closer to the ejection system, and, as the size of the stack of laminates increases, the pallet is lowered (to leave enough space between the ejection system and the stack of laminates to allow stacking to continue).

To control the fall of the laminates from the perforated belts of the vacuum system of the ejection system to the pallet or stack of laminates, the ejection system comprises lateral guides, which determine a minimum distance between the perforated belts of the vacuum system and the pallet or stack of laminates. These lateral guides are mounted on lateral supports extending from a frame of the ejection system and can be moved towards or away from each other, below the ejection system (to guide the laminates from the ejection system to the pallet or stack of laminates), whereby a sufficient distance must be maintained between the ejection system and the pallet/stack of laminates to allow the lateral guides to be positioned.

Furthermore, in the known ejection systems, the distribution of the vacuum assemblies in the direction transverse to the direction of travel of the laminate (i.e., across the width of the laminate) is a fixed distribution. Therefore, part of the laminate is overhanging when, due to the width of the laminate, the longitudinal ends of the same are arranged between vacuum assemblies.

As previously described, the ejection systems comprise a plurality of vacuum assemblies by which the movement of the laminates is performed. In order to break the vacuum and release the laminates so that they fall onto the pallet or onto a stack of laminates already on said pallet, the ejection systems comprise pushers. The pushers are arranged longitudinally on both sides of the perforated belts of the vacuum assemblies, which apply force on the laminate in a vertical direction, to force the laminate to separate from the perforated belt.

Ejection systems of this type are generally used on cardboard processing lines, but they entail problems when handling paper or other flexible laminated materials, due to their lack of rigidity.

One of the technical problems when using ejection systems with flexible material laminates is that when the flexible material laminate falls onto the pallet, the distance between the belt and the pallet must be minimal, otherwise, when the flexible material falls, it could fold or move from the position in which it is expected to fall. The lack of rigidity of the flexible material laminate complicates the predictability of the flight of said laminate from the time it is dropped from the perforated belts of the vacuum assembly to the pallet. However, in current stackers, the minimum distance between the perforated belts and the pallet (or the top laminate of the stack of laminates already on the pallet) corresponds to the length of the lateral guides and is too long to guarantee correct operation if the stackers were to be used with paper or other flexible laminated material.

If there is a desire to work with flexible laminated material in the currently known ejection systems, another technical problem lies in the fact that the lack of rigidity of the flexible material laminate causes the sides that could be overhanging when the flexible material laminates are picked up by the perforated belts (of the vacuum assembly) to bend. Furthermore, the fixed position of the perforated belts in the transverse direction of travel of the laminate (transverse direction of the laminate) means that some of the laminate formats do not have vacuum fastening at their longitudinal ends.

### DESCRIPTION OF THE INVENTION

The present invention makes it possible to use cardboard laminate processing lines to handle paper. The invention is included in the last stage of a paper or cardboard laminate processing line, wherein the paper or cardboard laminates are stacked on a pallet. Likewise, the present invention can be used to make the most of rigid laminated material processing lines with flexible laminated material.

To solve the problems described above, the ejection system of the present invention allows the position of retractable guides, which are the elements that secure the position of the laminates when they are released, to be adjusted so as to reduce the distance between the vacuum assemblies and the pallet, eliminating the previously known lateral guides from the ejection systems of the state of the art. For this purpose, the ejection system comprises retractable guides that are linked to the vacuum assemblies so that only the guides that are installed in the vacuum assemblies arranged in correspondence with lateral ends of the laminate are extended.

Given that these retractable guides must always be arranged in correspondence with the longitudinal ends of the laminate, the fact that there are several pairs of guides, arranged in several of the vacuum assemblies, makes it possible to use the ejection system for various laminate sizes (wider or narrower). As the guides are mounted on the vacuum assemblies themselves, their minimum distance is smaller than when they are mounted on lateral supports, as is the case in the ejection systems of the state of the art.

Furthermore, the ejection system of the invention comprises movable vacuum assemblies, which can be moved in the transverse direction of the ejection system (which corresponds to the transverse direction of the laminates when they are in the ejection system). In other words, the vacuum assemblies, with at least vacuum boxes and perforated belts, are mounted on a structure and are driven by a moving mechanism whereby they move along the structure, moving away from or towards each other, allowing the distance between them to be varied (thus resulting in an "accordion"-type movement). This ensures that the laminates are fastened correctly, with the stresses on the laminate (caused by the vacuum assemblies) being distributed evenly (homogeneously) over the entire top face of the laminate.

The ejection system of the present invention also prevents the longitudinal ends of the flexible material laminate from being overhung. This is also achieved by moving the vacuum assemblies in the transverse direction of the ejection system. This ensures that the longitudinal ends of the laminate are always fastened with a vacuum assembly, which is essential to avoid overhanging and to prevent the laminate from falling in a position different from the estimated position (which can cause misalignments in the stack of laminates, for example).

### BRIEF DESCRIPTION OF THE FIGURES

To complete the description, and for the purpose of helping to make the features of the invention more readily understandable, this description is accompanied by a set of drawings constituting an integral part of the same, which by way of illustration and not limitation represents the following:

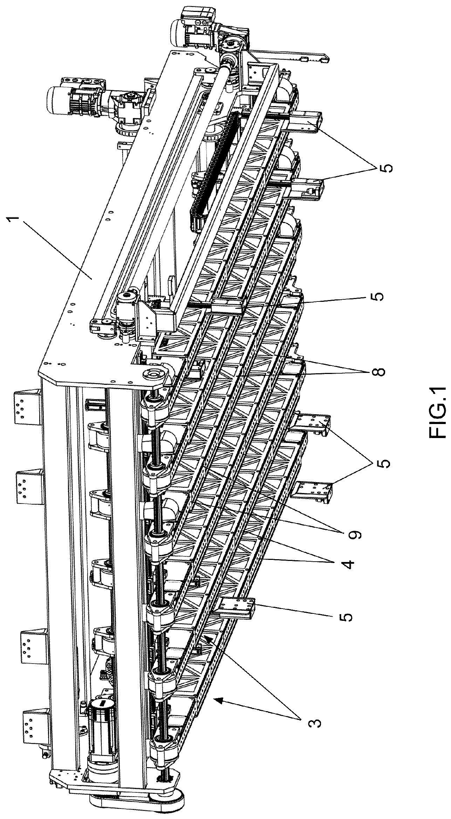

Figure 1 shows a bottom perspective view of the ejection system of the invention.

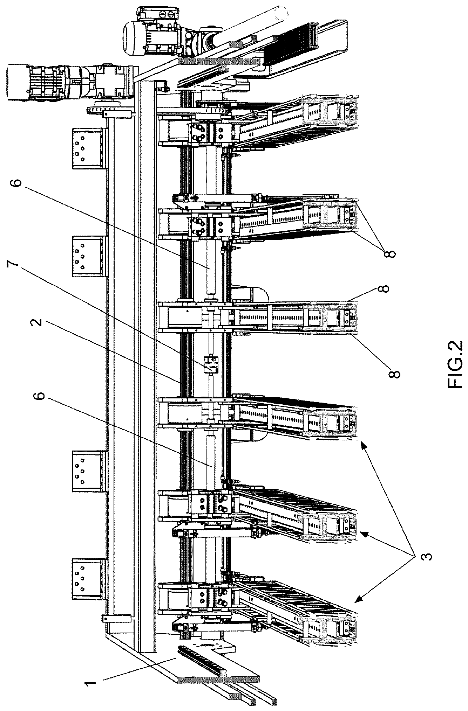

Figure 2 represents a sectioned view of the ejection system of the invention showing the sectioned vacuum assemblies.

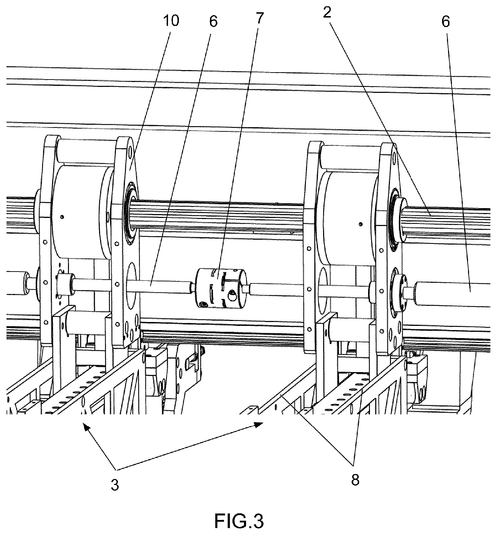

Figure 3 shows a detail view of the vacuum assembly carrier plates, the splined shaft and the spindle connection.

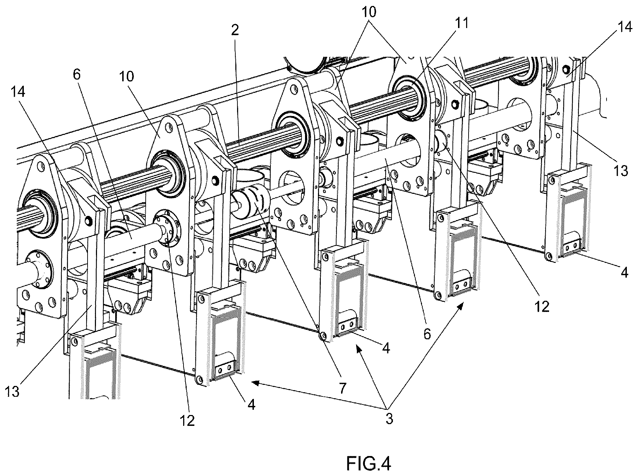

Figure 4 shows a detail view of the connecting rod-crank mechanisms.

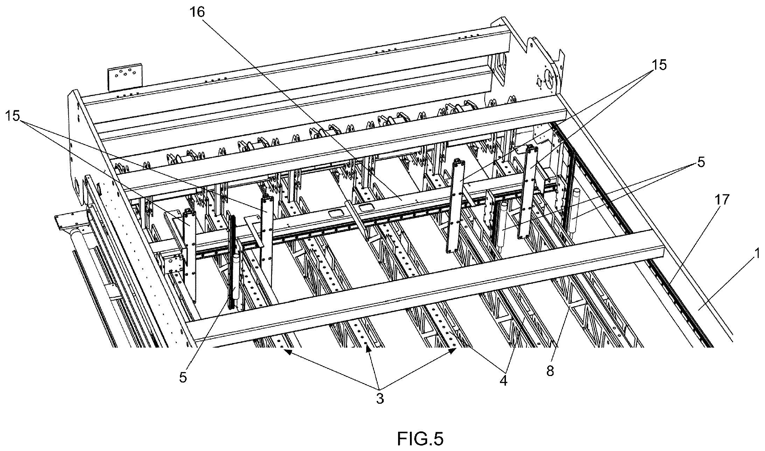

Figure 5 shows a sectional perspective view in which the stops that determine the end of the movement of the laminate in the ejection system can be seen.

Number references:
1: frame; 2: splined shaft; 3: vacuum box; 4: perforated belt; 5: retractable guide; 6: spindle; 7: mechanical connecting element; 8: pusher plates; 9: bolt; 10: vacuum assembly carrier plate; 11: splined inner ring; 12: nut; 13: connecting rod; 14: crank; 15: stop; 16: beam; 17: rail

### DETAILED DESCRIPTION

The present invention describes an ejection system, configured to receive and move laminates of laminated material and subsequently release them onto a pallet and/or a stack of laminates already stacked on a pallet. The technical features of the ejection system make it possible to work with flexible material laminates in addition to rigid material laminates, despite the particularities associated with flexible material laminates due to their low rigidity.

The ejection system comprises a frame (1) on which vacuum assemblies are movably mounted via splined shafts (2). Said vacuum assemblies comprise at least vacuum boxes (3) and perforated belts (4), wherein the perforated belts (4) are conveyor belts with a plurality of perforations to allow the vacuum generated in the vacuum chambers (3) to be applied to the laminates to be moved. The perforated belts (4) each move around an associated vacuum box (3). Said vacuum assemblies can be moved along the splined shafts (2) by moving towards or away from each other.

The vacuum assemblies are connected, in one exemplary embodiment, to an external vacuum generation system.

Likewise, the ejection system preferably comprises retractable guides (5) mounted on the vacuum assemblies. These retractable guides (5) can be moved between a retracted position and a guided position, in which they have moved vertically in a direction perpendicular to the longitudinal direction of the vacuum assemblies, moving away from the frame (1). Thus, when in the retracted position, they are flush with or above the perforated belts (4) so that they do not interfere with the movement of the laminate along the ejection system. Moreover, retractable guides (5) are preferably located in several vacuum drawers so that only the retractable guides (5) that are installed in the vacuum drawers aligned with the longitudinal ends of the laminates are moved to the guiding position based on the size of the laminates to be moved.

In a preferred embodiment, each vacuum assembly comprises at least two retractable guides (5), distributed in the longitudinal direction of said vacuum assembly. Moreover, the retractable guides (5) are preferably distributed in pairs, one of the retractable guides (5) of each pair being installed in a vacuum drawer which can be aligned with opposite longitudinal ends of the laminates. Thus, in a preferred embodiment, the guiding of each laminate is carried out with four retractable guides (5), two of which are installed in each vacuum drawer that is aligned with a longitudinal end of the corresponding laminate. This ensures that the laminate is correctly guided from the moment it is released from the perforated belts until it falls onto the pallet or onto the stack of laminates already on the pallet.

In one exemplary embodiment, the retractable guides (5) are linear actuators (for example, pneumatic actuators). As they are mounted directly on the vacuum assemblies, they require a smaller distance (measured vertically, i.e., with respect to the pallet on which the laminates are to be stacked) for correct guiding. This allows the pallet (mounted on a vertical lifting system) to be moved closer to a position that is much closer to the stacker than is possible with the stackers of the state of the art, where the minimum distance required to guarantee the movement (moving closer in the transverse direction) of the guides until they come into contact with the corresponding laminate, with said guides mounted on lateral supports, was too large to allow the use of said stackers with flexible laminates.

Given the retractable guides (5) of the ejection system and their position in said ejection system, the pallet on which the laminates are to be unloaded can be moved closer within a few millimetres of the ejection system (more specifically of the perforated belts of the vacuum assemblies that fasten the laminates in place and move them).

In one exemplary embodiment, the ejection system also comprises stops (15), configured to limit the longitudinal movement of the laminates. These stops (15) can be mounted on a beam (7) that can be moved along the frame (1), preferably mounted on sliding rails (17). The beam (7) extends between longitudinal ends of the frame (1), parallel to transverse ends of the frame (1).

To adjust the position of the vacuum assemblies (more or less spaced apart), the ejection system comprises a position adjustment mechanism configured to adapt the position of the vacuum assemblies in the transverse direction of the frame (1) to the size of the laminates to be moved and stacked. This mechanism comprises two spindles (6), each with a first end and a second end, with diameters of different sizes, and which are connected to each other by corresponding ends with a smaller diameter. Each spindle (6) is threaded in one direction (clockwise and anti-clockwise) and, in one exemplary embodiment, each spindle (6) comprises three sections with different diameters. The spindles (6) are preferably connected at their ends with a smaller diameter by means of a mechanical connecting element (7).

Given that the vacuum assemblies are engaged with the spindles (6), we can move them all in a single movement, in other words, the vacuum assemblies are engaged with the spindles (6) so that they can all be moved in a single movement.

Each vacuum assembly preferably incorporates a pair of vacuum assembly carrier plates (10) arranged at its ends, fixed to the vacuum box (3). These vacuum assembly carrier plates (10) contain the splined inner rings (11) engaged with a splined shaft (2). This arrangement allows the vacuum assemblies (3) to be suspended in air, resting on the splined shafts (2). In addition, a nut (12) is fixed to each vacuum assembly carrier plate (10), which in turn engages with the spindle (6), allowing the rotary movement of the spindle to be converted into linear movement of each vacuum assembly.

Given this arrangement, the rotary movement of the spindles (6) is transformed into linear movement of the vacuum assemblies, moving apart or away from each other (depending on the directions of rotation of the spindles (6)), with a stroke equivalent to the length of the section of the spindle (6) associated with each diameter in which the nut (12) is engaged. As each spindle (6) is threaded in one direction, the direction of linear movement in the direction of the spindle of each vacuum assembly depends on the direction of threading. The result is that the vacuum assemblies linked to the right-hand threaded spindle move in the opposite direction to the vacuum assemblies linked to the left-hand threaded spindle. Given the mechanical connection (10) connecting the two spindles (6), only one motor is needed to transmit the movement to all the vacuum assemblies (3) engaged in each of the sections of the spindles (6).

Furthermore, the ejection system comprises ejection assemblies in correspondence with each vacuum assembly configured to act on the perforated belts (4), separating them from the vacuum boxes (3). In one possible embodiment, these comprise pusher plates (8), arranged in pairs on each side of the vacuum boxes (3), and connected by bolts (9) arranged just above the perforated belts (4) and located in recesses of the vacuum boxes. Said pusher plates (8) are moved vertically between a rest position and a release position in which they move away from the vacuum boxes (3), causing the bolts (9) attached to the pusher plates (8) to move the perforated belts (4) downwards and away from the vacuum box (3) in order to break said vacuum. The vertical movement of the pusher plates (11) also pushes the laminate, causing it to be ejected.

In one exemplary embodiment, in the rest position of the elements involved in vacuum breaking and material ejection, the lower sides of the ejection plates (11) and the bolts are flush with the inner face of the perforated belt (4) and are housed in the recesses of the vacuum box (3). In the release position, both the ejection plates (11) and the bolts (9) move downwards, causing the vacuum to break due to the separation of the perforated belt (4) from the vacuum box (3) caused by the perforated belt (4) being dragged by the movement of the bolts (9).

The pusher plates (8) are preferably driven by a connecting rod-crank mechanism that converts the circular movement of the splined shaft (2) into linear movement. The splined shaft (2) is engaged with a splined inner ring (11). This connection transmits the rotary movement of the splined shaft (2) to the splined inner ring (11) while allowing the latter to move along the splined shaft (2). Moreover, the splined inner ring (11) is connected to a crank (14) connected to the pusher plates (8) by a connecting rod (13), to convert the rotary movement of the splined shaft (2) to vertical linear movement.

Thus, the ejection system of the invention can be adjusted to the width of the laminates to be processed (by adapting the position of the vacuum assemblies and selecting the most suitable retractable guides (5) based on said width). There will always be a vacuum box corresponding to each longitudinal end of the laminates, thus eliminating the overhangs of the laminate, especially relevant when working with flexible material laminates, and eliminating the curvature produced by said overhangs due to the lack of rigidity of the flexible material.

The vacuum is broken by movement of the perforated belts (4), which means that it is not only the pushers that act on the laminate, thus allowing the vacuum to be broken and the laminate to be ejected when the ejection system is used with flexible material laminates.

Furthermore, with the ejection system of the present invention, the distance between said ejection system and the pallet (or last laminate of the stack already released) that is arranged facing it to receive the stack of laminates is reduced to just a few millimetres. This ensures maximum stacking accuracy and avoids unpredictable flight when using the ejection system with flexible material laminates.

One of the novel features relates to the fact that the vacuum assemblies move laterally, which means that a system had to be developed to transmit the rotary movement of the splined shaft (2) (from which the vacuum assemblies hang) and convert it into linear movement to drive the pusher plates (8), without limiting the linear movement along the splined shaft (2). This is not necessary in the systems known in the state of the art, which do not involve the possibility of movement of the vacuum assemblies as the splined shaft could be a simple shaft with connecting rods fixed to it. In order to solve this technical problem, it was necessary to mount splined inner rings (11) on the vacuum assembly carrier plates (10), said splined inner rings engaging with the splined shaft (2), allowing them to move along the splined shaft (2) while they are integral with the rotary movement of the splined shaft (2).

Therefore, an ejection system for laminated material stackers is described that is configured to receive said laminates in an initial position, move them and release them in a final position and it comprises:
- a frame (1) with transverse ends and longitudinal ends, and on this frame (1) vacuum assemblies are movably mounted via splined shafts (2);
- said vacuum assemblies comprise at least vacuum boxes (3) and perforated belts (4) which are conveyor belts with a plurality of perforations to allow the vacuum generated in the vacuum boxes (3) to be applied to the laminates to be moved;
- the vacuum assemblies can be moved on the splined shafts (2), moving towards or away from each other;
- it comprises retractable guides (5) mounted on the vacuum assemblies, wherein said retractable guides (5) can be moved between a retracted position and a guided position, in which they have moved vertically in a direction perpendicular to the longitudinal direction of the vacuum assemblies, moving away from the frame (1);
- position adjustment mechanism configured to adapt the position of the vacuum assemblies in the transverse direction of the frame (1), wherein said mechanism comprises at least one pair of spindles (6), each having a first end and a second end, and wherein each spindle (6) is threaded in a different direction, clockwise and anti-clockwise respectively;
- the vacuum assemblies engage with the spindles (6) by means of nuts (12) such that the rotation of the spindles (6) causes the longitudinal movement of the vacuum assemblies.

In one possible embodiment, it comprises at least one vacuum assembly carrier plate (10) in correspondence with each vacuum assembly at one end thereof, connected to the corresponding vacuum box (3) and in said at least one vacuum assembly carrier plate (10) is a splined inner ring (11), which is in turn engaged with the splined shaft (2).

In one possible embodiment, it comprises at least one vacuum assembly carrier plate (10) in correspondence with each vacuum assembly at one end thereof, connected to the corresponding vacuum box (3) and in said at least one vacuum assembly carrier plate (10) is a nut (12), which is in turn engaged with the corresponding spindle (6).

Furthermore, in one embodiment, it may comprise at least one ejection assembly, with pusher plates (8), in correspondence with at least one of the vacuum assemblies and it may comprise a connecting rod-crank mechanism. Said connecting rod-crank mechanism is linked to a splined inner ring (11) by means of which the vacuum assemblies and splined shaft (2) are linked and which is configured to engage with the splined shaft (2) and move along said splined shaft (2), and the connecting rod-crank mechanism comprises a crank (14) that is connected to said splined inner ring (11) and comprises a connecting rod (13) connected to the pusher plates (8) of the ejection assembly.

As can be seen in the figures, in one embodiment of the invention, the vacuum boxes (3) extend longitudinally in the direction of travel of the laminates between the initial position and the final position.

As shown in the figures, it may also comprise stops (15) configured to limit the longitudinal movement of the laminates in the final position. In this case, the stops (15) are preferably mounted on a beam (7) that can be moved along the frame (1) by sliding rails (8) arranged on said frame (1) in the longitudinal direction of said frame (1).

With regard to the retractable guides (5), the system preferably comprises pairs of retractable guides facing each other and, preferably, comprises two pairs of retractable guides (5) in correspondence with each corresponding vacuum assembly, arranged at a front end and a rear end of each of said vacuum assemblies. In one exemplary embodiment, said retractable guides (5) are linear actuators.

In one exemplary embodiment, each spindle (6) comprises sections of different diameters. In another possible embodiment, the spindles (6) are connected to each other at their ends with a diameter having a smaller cross-section.

## Claims

1. An ejection system for laminated material stackers that is configured to receive said laminates in an initial position, move them and release them in a final position, **characterised in that** it comprises:
- a frame (1) with transverse ends and longitudinal ends, and on this frame (1) vacuum assemblies are movably mounted via splined shafts (2);
- said vacuum assemblies comprise at least vacuum boxes (3) and perforated belts (4) which are conveyor belts with a plurality of perforations to allow the vacuum generated in the vacuum boxes (3) to be applied to the laminates to be moved;
- the vacuum assemblies can be moved on the splined shafts (2), moving towards or away from each other;
- it comprises retractable guides (5) mounted on the vacuum assemblies, wherein said retractable guides (5) can be moved between a retracted position and a guided position, in which they have moved vertically in a direction perpendicular to the longitudinal direction of the vacuum assemblies, moving away from the frame (1);
- position adjustment mechanism configured to adapt the position of the vacuum assemblies in the transverse direction of the frame (1), wherein said mechanism comprises at least one pair of spindles (6), each having a first end and a second end, and wherein each spindle (6) is threaded in a different direction, clockwise and anti-clockwise respectively;
- the vacuum assemblies engage with the spindles (6) by means of nuts (12) such that the rotation of the spindles (6) causes the longitudinal movement of the vacuum assemblies.

2. The system according to any one of the preceding claims, comprising at least one vacuum assembly carrier plate (10) in correspondence with each vacuum assembly at one end thereof, connected to the corresponding vacuum box (3) and in said at least one vacuum assembly carrier plate (10) is a splined inner ring (11), which is in turn engaged with the splined shaft (2).

3. The system according to any one of the preceding claims, comprising at least one vacuum assembly carrier plate (10) in correspondence with each vacuum assembly at one end thereof, connected to the corresponding vacuum box (3) and in said at least one vacuum assembly carrier plate (10) is a nut (12), which is in turn engaged with the corresponding spindle (6).

4. The system according to any one of the preceding claims, comprising at least one ejection assembly, with pusher plates (8), in correspondence with at least one of the vacuum assemblies and comprising a connecting rod-crank mechanism linked to a splined inner ring (11) by means of which the vacuum assemblies and splined shaft (2) are linked and which is configured to engage with the splined shaft (2) and move along said splined shaft (2), and the connecting rod-crank mechanism comprises a crank (14) that is connected to said splined inner ring (11) and comprises a connecting rod (13) connected to the pusher plates (8) of the ejection assembly.

5. The system according to any one of the preceding claims, wherein the vacuum boxes (3) extend longitudinally in the direction of travel of the laminates between the initial position and the final position.

6. The system according to any one of the preceding claims, comprising stops (15) configured to limit the longitudinal movement of the laminates in the final position.

7. The system according to claim 6, wherein the stops (15) are mounted on a beam (7) that can be moved along the frame (1) by sliding rails (17) arranged on said frame (1) in the longitudinal direction of said frame (1).

8. The system according to any one of the preceding claims, comprising pairs of retractable guides (5) facing each other.

9. The system according to any one of the preceding claims, comprising two pairs of retractable guides (5) in correspondence with each corresponding vacuum assembly, arranged at a front end and a rear end of each of said vacuum assemblies.

10. The system according to any one of the preceding claims, wherein the retractable guides (5) are linear actuators.

11. The system according to any one of the preceding claims, wherein each spindle (6) comprises sections of different diameters.

## Amended claims

### Amended claims in accordance with Rule 137(2) EPC.

1. An ejection system for laminated material stackers that is configured to receive said laminates in an initial position, move them and release them in a final position, **characterised in that** it comprises:
- a frame (1) with transverse ends and longitudinal ends, and on this frame (1) vacuum assemblies are movably mounted via splined shafts (2);
- said vacuum assemblies comprise at least vacuum boxes (3) and perforated belts (4) which are conveyor belts with a plurality of perforations to allow the vacuum generated in the vacuum boxes (3) to be applied to the top of the laminates to be moved;
- the vacuum assemblies can be moved on the splined shafts (2), moving towards or away from each other;
- it comprises retractable guides (5) mounted on the vacuum assemblies, wherein said retractable guides (5) can be moved between a retracted position and a guided position, in which they have moved vertically in a direction perpendicular to the longitudinal direction of the vacuum assemblies, moving away from the frame (1);
- position adjustment mechanism configured to adapt the position of the vacuum assemblies in the transverse direction of the frame (1), wherein said mechanism comprises at least one pair of spindles (6), each having a first end and a second end, and wherein each spindle (6) is threaded in a different direction, clockwise and anticlockwise respectively;
- the vacuum assemblies engage with the spindles (6) by means of nuts (12) such that the rotation of the spindles (6) causes the longitudinal movement of the vacuum assemblies.

2. The system according to any one of the preceding claims, comprising at least one vacuum assembly carrier plate (10) in correspondence with each vacuum assembly at one end thereof, connected to the corresponding vacuum box (3) and in said at least one vacuum assembly carrier plate (10) is a splined inner ring (11), which is in turn engaged with the splined shaft (2).

3. The system according to any one of the preceding claims, comprising at least one vacuum assembly carrier plate (10) in correspondence with each vacuum assembly at one end thereof, connected to the corresponding vacuum box (3) and in said at least one vacuum assembly carrier plate (10) is a nut (12), which is in turn engaged with the corresponding spindle (6).

4. The system according to any one of the preceding claims, comprising at least one ejection assembly, with pusher plates (8), in correspondence with at least one of the vacuum assemblies and comprising a connecting rod-crank mechanism linked to a splined inner ring (11) by means of which the vacuum assemblies and splined shaft (2) are linked and which is configured to engage with the splined shaft (2) and move along said splined shaft (2), and the connecting rod-crank mechanism comprises a crank (14) that is connected to said splined inner ring (11) and comprises a connecting rod (13) connected to the pusher plates (8) of the ejection assembly.

5. The system according to any one of the preceding claims, wherein the vacuum boxes (3) extend longitudinally in the direction of travel of the laminates between the initial position and the final position.

6. The system according to any one of the preceding claims, comprising stops (15) configured to limit the longitudinal movement of the laminates in the final position.

7. The system according to claim 6, wherein the stops (15) are mounted on a beam (16) that can be moved along the frame (1) by sliding rails (17) arranged on said frame (1) in the longitudinal direction of said frame (1).

8. The system according to any one of the preceding claims, comprising pairs of retractable guides (5) facing each other.

9. The system according to any one of the preceding claims, comprising two pairs of retractable guides (5) in correspondence with each corresponding vacuum assembly, arranged at a front end and a rear end of each of said vacuum assemblies.

10. The system according to any one of the preceding claims, wherein the retractable guides (5) are linear actuators.

11. The system according to any one of the preceding claims, wherein each spindle (6) comprises sections of different diameters.
